# EUROPEAN PATENT APPLICATION

(11) **EP 4 706 418 A1**
(43) Date of publication of application: **11.03.2026**
(21) Application number: 25711588.1
(22) Date of filing: 19.02.2025
(51) Int. Cl.: A24F 40/30

(54) **ATOMIZATION DEVICE AND LIQUID STORAGE APPARATUS THEREOF**

(30) Priority: 16.07.2024 CN 202410957121
(71) Applicant: Shenzhen Geekvape Technology Co., Ltd., Shenzhen, Guangdong 518101 (CN)
(72) Inventor: DENG, Keping, Shenzhen, Guangdong 518101 (CN)
(74) Representative: Haseltine Lake Kempner LLP
(86) International application number: PCT/CN2025/078135
(87) International publication number: WO 2026/016469

(57) **Abstract**

The present application relates to an atomization device and a liquid storage device thereof. The atomization device includes an atomization housing (1), an atomization core (2), and a suction nozzle (3). The atomization core (2) is received in a receiving cavity (11). The atomization core (2) is provided with a liquid storage cavity (211) and an atomization cavity (221). The liquid storage cavity (211) is in communication with the atomization cavity (221). An end of the liquid storage cavity (211) adjacent to a mounting opening (12) is provided with an openable and closable liquid guide channel (212). The suction nozzle (3) is detachably mounted at the mounting opening (12), and the liquid storage device (4) can be detachably mounted between the suction nozzle (3) and the mounting opening (12).

## Description

### CROSS-REFERENCE TO RELATED APPLICATIONS

This application claims priority to Chinese Patent Application No. 202410957129.5, filed on July 16, 2024, entitled "ATOMIZATION DEVICE AND LIQUID STORAGE DEVICE THEREOF", the entire content of which is incorporated herein by reference in its entirety.

### TECHNICAL FIELD

The present application relates to the technical field of aerosol atomization, and in particular to an atomization device and a liquid storage device thereof.

### BACKGROUND

In order to satisfy different inhalation taste requirements of users, the current atomization device is provided with multiple e-liquid bins therein, which are respectively configured to receive different tastes of e-liquid. The user can switch among different tastes of e-liquid for atomization and inhalation by pressing buttons or sliding.

The current atomization device is provided with fixed e-liquid bins therein, so that a total number of different tastes is limited, and the user can only choose from specified tastes, and cannot customize the mixing of different tastes of e-liquid for inhalation. Therefore, the current atomization device still cannot satisfy the inhalation requirements of various tastes of the users.

### SUMMARY

According to various embodiments of the present application, an atomization device and a liquid storage device thereof are provided.

In an embodiment, the present application provides an atomization device, which includes:
an atomization housing provided with a receiving cavity and a mounting opening in communication with the receiving cavity;
an atomization core received in the receiving cavity, wherein the atomization core is provided with a liquid storage cavity and an atomization cavity, the liquid storage cavity is configured to store an atomization substrate and is in communication with the atomization cavity, and an end of the liquid storage cavity adjacent to the mounting opening is provided with a liquid guide channel that is openable and closeable; and
a suction nozzle detachably mounted at the mounting opening and being in communication with the atomization cavity, wherein a liquid storage device is detachably mounted between the suction nozzle and the mounting opening, the liquid storage device is configured to open the liquid guide channel, so that a liquid storing cavity of the liquid storage device is in communication with the liquid storage cavity, and the suction nozzle is in communication with the atomization cavity through an air guide channel of the liquid storage device.

In an embodiment, the atomization device further includes a rotation sealing assembly rotatably provided at an end of the atomization core adjacent to the mounting opening, the rotation sealing assembly is provided with a connecting hole, and the rotation sealing assembly is configured to be detachably connected to the liquid storage device;
the rotation sealing assembly is capable of being driven by the liquid storage device to rotate until the connecting hole is in communication with the liquid guide channel, so as to open the liquid guide channel;
the rotation sealing assembly is capable of being driven by the liquid storage device to rotate until the connecting hole is staggered from and not in communication with the liquid guide channel, so as to close the liquid guide channel.

In an embodiment, the rotation sealing assembly includes a rotation engagement member and a rotation sealing member, the rotation engagement member is rotatably connected to the atomization core through the rotation sealing member, an end of the rotation engagement member away from the rotation sealing member is provided with an inserting portion, the inserting portion is configured to be detachably engaged with a clamping portion of the liquid storage device, the rotation sealing member is elastic, the rotation engagement member and the rotation sealing member are provided with through holes that are aligned with and in communication with each other to form the connecting hole.

In an embodiment, an end of the atomization core adjacent to the mounting opening is provided with a mounting groove, the liquid guide channel is located at a bottom of the mounting groove, and the rotation sealing assembly is rotatably mounted in the mounting groove.

In an embodiment, a suction nozzle bracket is provided at an end of the atomization core adjacent to the mounting opening, a part of the suction nozzle bracket covers the rotation sealing assembly, and the suction nozzle bracket is configured to limit the rotation sealing assembly in the atomization housing.

In an embodiment, the suction nozzle bracket is provided with a first engagement portion, an end of the suction nozzle adjacent to the atomization core is provided with a second engagement portion, the second engagement portion is configured to be detachably connected to the first engagement portion, and the second engagement portion is further configured to be detachably connected to a snap-fit portion of the liquid storage device.

In an embodiment, the suction nozzle bracket is further provided with a seal-breaking portion, the seal-breaking portion is configured to scratch or puncture a sealing portion of the liquid storage device configured to seal the liquid storing cavity, so as to communicate the liquid storage cavity with the liquid storing cavity.

In an embodiment, the seal-breaking portion is a knife-shaped structure or a spike structure.

In an embodiment, the atomization core includes a liquid storage bin, a sealing structure, and a heating body, the sealing structure is mounted at an end of the liquid storage bin, the liquid storage bin and the sealing structure enclose the liquid storage cavity, the atomization cavity is located in the sealing structure, and the heating body is mounted in the atomization cavity.

In an embodiment, a control board and a battery are provided in the atomization housing, the control board is electrically connected to the battery and the heating body.

In an embodiment, the liquid storage device includes a liquid storage structure and a sealing member, the sealing member is mounted at an end of the liquid storage structure, the sealing member and the liquid storage structure enclose a liquid storing cavity, the liquid storage structure and the sealing member are cooperatively provided with the air guide channel extending through the liquid storage structure and the sealing member, an end of the liquid storage structure away from the sealing member is configured to be detachably connected to the atomization core, an end of the sealing member away from the liquid storage structure is configured to be detachably connected to the suction nozzle, the end of the liquid storage structure away from the sealing member is provided with a liquid guide passage in communication with the liquid storing cavity, the end of the liquid storage structure away from the sealing member is further provided with a sealing portion, the sealing portion is configured to seal the liquid guide passage, and the sealing portion is capable of being scratched or punctured.

In an embodiment, the end of the liquid storage structure away from the sealing member is provided with a clamping portion, the clamping portion is configured to be detachably connected to the atomization core, an end of the sealing member away from the liquid storage structure is provided with a snap-fit portion, and the snap-fit portion is configured to be detachably connected to the suction nozzle.

In an embodiment, the sealing portion is an aluminum foil film.

In an embodiment, the present application provides a liquid storage device, which includes a liquid storage structure and a sealing member. The sealing member is mounted at an end of the liquid storage structure, the sealing member and the liquid storage structure enclose a liquid storing cavity, the liquid storage structure and the sealing member are cooperatively provided with an air guide channel, an end of the liquid storage structure away from the sealing member is configured to be detachably connected to an atomization core, an end of the sealing member away from the liquid storage structure is configured to be detachably connected to a suction nozzle, the end of the liquid storage structure away from the sealing member is provided with a liquid guide passage in communication with the liquid storing cavity, the end of the liquid storage structure away from the sealing member is further provided with a sealing portion, the sealing portion is configured to seal the liquid guide passage, and the sealing portion is capable of being scratched or punctured.

In an embodiment, the end of the liquid storage structure away from the sealing member is provided with a clamping portion, the clamping portion is configured to be detachably connected to the atomization core, an end of the sealing member away from the liquid storage structure is provided with a snap-fit portion, and the snap-fit portion is configured to be detachably connected to the suction nozzle.

In an embodiment, the sealing portion is an aluminum foil film.

Details of one or more embodiments of the present application are set forth in the following drawings and descriptions. Other features, objects and advantages of the present application will become apparent from the description, drawings, and claims.

### BRIEF DESCRIPTION OF THE DRAWINGS

To illustrate the technical solutions in the embodiments of the present application or in the prior art more clearly, the accompanying drawings for describing the embodiments or the prior art are introduced briefly in the following. Apparently, the accompanying drawings in the following description are only some embodiments of the present application, and persons of ordinary skill in the art can derive other drawings from the accompanying drawings without creative efforts.
FIG. 1 is a schematic structural view of an atomization device mounted with a liquid storage device according to an embodiment.
FIG. 2 is an axial cross-sectional view of an atomization device mounted with a liquid storage device not in communication with a liquid storage cavity according to an embodiment.
FIG. 3 is an axial cross-sectional view of an atomization device mounted with a liquid storage device in communication with a liquid storage cavity according to an embodiment.
FIG. 4 is an enlarged view of a portion K of FIG. 3.
FIG. 5 is a schematic structural view of an atomization device without being mounted with a liquid storage device according to an embodiment.
FIG. 6 is an axial cross-sectional view of an atomization device without being mounted with a liquid storage device according to an embodiment.
FIG. 7 is a schematic view of a partial structure of an atomization device according to an embodiment.
FIG. 8 is a schematic structural view of a liquid storage device according to an embodiment viewed from an aspect.
FIG. 9 is a schematic structural view of a liquid storage device according to an embodiment viewed from another aspect.
FIG. 10 is a schematic structural view of a rotation sealing assembly according to an embodiment.

### Reference numerals:

1. atomization housing; 11. receiving cavity; 12. mounting opening; 13. bottom cover;
2. atomization core; 21. liquid storage bin; 211. liquid storage cavity; 212. liquid guide channel; 213 mounting groove; 22. sealing structure; 221. atomization cavity; 23. heating body;
3. suction nozzle; 31. suction portion; 32. second engagement portion; 33. connecting tube; 34. flange;
4. liquid storage device; 41. liquid storage structure; 411. liquid storing cavity; 412. liquid guide passage; 413. clamping portion; 42. sealing member; 421. snap-fit portion; 43. air guide channel; 44. sealing portion;
5. control board;
6. battery;
7. rotation sealing assembly; 71. rotation engagement member; 711. inserting portion; 72. rotation sealing member; 73. connecting hole; 731. through hole; 74. vent hole;
8. suction nozzle bracket; 81. first engagement portion; 82. seal-breaking portion;
A. first atomization substrate; B. second atomization substrate.

### DETAILED DESCRIPTION OF THE EMBODIMENTS

The present application will be further described in detail in combination with the accompanying drawings. Similar elements in different embodiments use associated similar element numbers. In the following embodiments, many details are described to enable the present application to be better understood. However, those skilled in the art may readily recognize that some of the features may be omitted in different cases or may be replaced by other elements, materials, or methods. In some cases, some operations related to the present application are not shown or described in the specification, so as to avoid the core part of the application being neglected by excessive descriptions. However, it is not necessary for those skilled in the art to describe these related operations in detail, and they can fully understand the related operations based on the description in the specification and the general technical knowledge in the art.

In addition, the features, operations, or features described in the specification may be combined in any suitable manner to form various embodiments. At the same time, the steps or actions in the method description may be sequentially changed or adjusted in a manner obvious to those skilled in the art. Therefore, the various orders in the specification and drawings are only for clarity in describing one embodiment and are not meant to be a necessary order unless otherwise specified, in which case an order must be followed.

The numbers of components herein, such as "first," "second," etc., are only used to distinguish the described objects and has no sequence or technical meaning. As use herein, "connected" and "couple" include direct and indirect connections unless otherwise specified. An axial direction herein refers to an axial direction of a cylindrical atomization housing, and a radial direction refers to a radial direction of the cylindrical atomization housing.

According to an embodiment, an atomization device is provided. The atomization device has a fixed liquid storage bin and a replaceable liquid storage bin. The fixed liquid storage bin can be independently used to directly inhale an atomization substrate with a preset taste. The fixed liquid storage bin and the replaceable liquid storage bin can also be used in combination. The replaceable liquid storage bin can store an atomization substrate of other tastes. The atomization substrate of two tastes can be mixed to form an atomization substrate of a new taste. The user can choose the new taste formed by the combination of the replaceable liquid storage bin and the fixed liquid storage bin of any taste, which can greatly satisfy the user's personalized and various use requirements. For example, the fixed liquid storage bin stores an atomization substrate with apple taste, and the user can directly inhale the atomization substrate with apple taste. The replaceable liquid storage bin stores an atomization substrate with any taste such as blueberry taste, strawberry taste, and banana taste, etc. The user can also choose to mix the atomization substrate stored with any taste such as blueberry taste, strawberry taste, and banana taste, etc., with the atomization substrate with apple taste to form a new mixed fruit taste, or other new tastes.

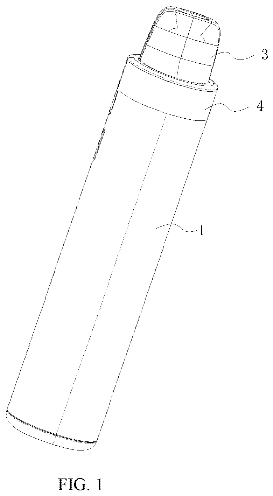

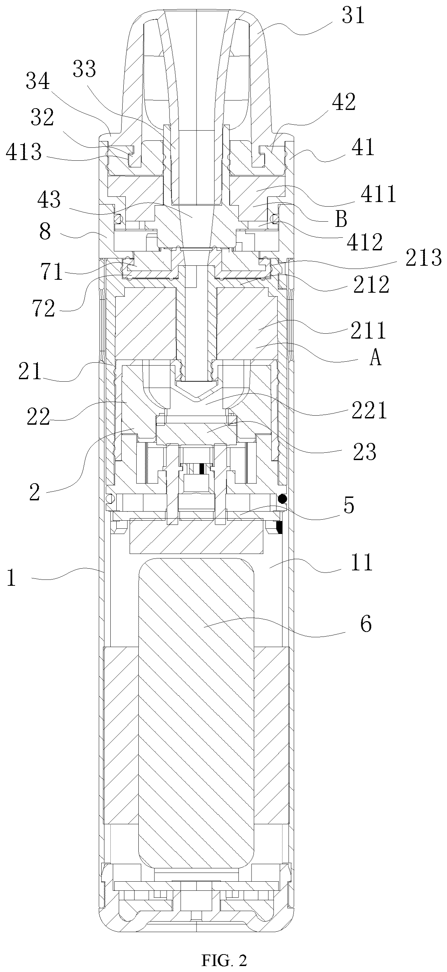

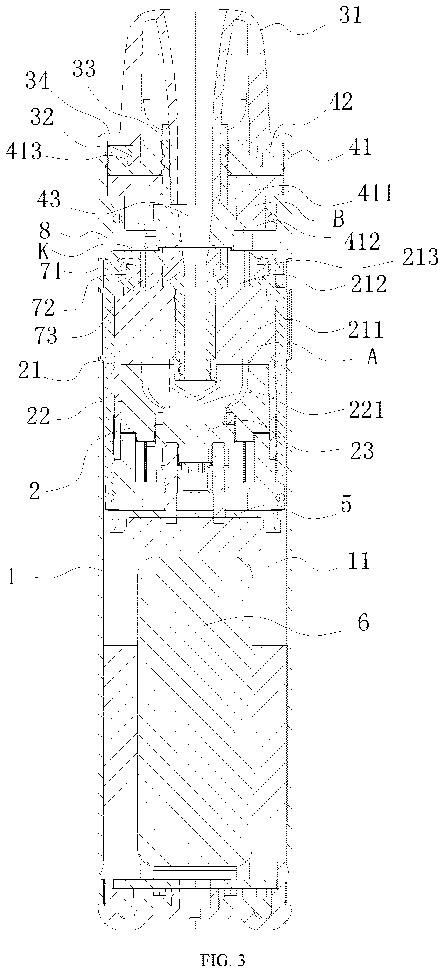

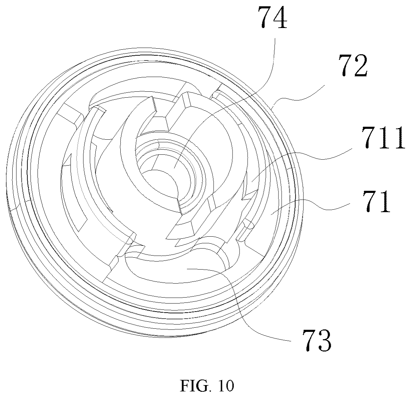

Referring to FIG. 1 to FIG. 10, the atomization device of the present embodiment mainly includes an atomization housing 1, an atomization core 2, a suction nozzle 3, and a liquid storage device 4. The atomization device may further include a control board 5 and a battery 6. The atomization core 2, the control board 5, and the battery 6 are mounted in the atomization housing 1.

In other embodiments, the control board 5 and the battery 6 may be omitted. The control board 5 and the battery 6 may be provided in another housing, which may be fixedly mounted with the atomization housing 1.

In this embodiment, the atomization housing 1 may be of a cylindrical structure. The atomization housing 1 has a receiving cavity 11 and a mounting opening 12, and the mounting opening 12 is located at an end of the atomization housing 1 and is in communication with the receiving cavity 11. An end of the atomization housing 1 away from the mounting opening 12 may be provided with a bottom cover 13, and the bottom cover 13 may be fixedly or detachably connected to the atomization housing 1.

The atomization core 2 is located in the receiving cavity 11 and adjacent to the mounting opening 12. The atomization core 2 mainly includes a liquid storage bin 21, a sealing structure 22, and a heating body 23. The liquid storage bin 21 is of a cylindrical structure with an opening at an end thereof. The sealing structure 22 may be a structure with elastic, such as a sealing silicone member. The sealing structure 22 is connected to the liquid storage bin 21. The sealing structure 22 blocks the opening of the liquid storage bin 21. The liquid storage bin 21 and the sealing structure 22 enclose a liquid storage cavity 211, which is configured to store a first atomization substrate A of a first taste.

The sealing structure 22 is provided with an atomization cavity 221 therein, which is in communication with the liquid storage cavity 211. The heating body 23 may be of a heating structure such as a conductive ceramic, etc. The heating body 23 is mounted in the atomization cavity 221. The heating body 23 is electrically connected to the control board 5. The control board 5 is further electrically connected to the battery 6. The control board 5 is configured to control the heating body 23 to heat the atomization substrate entering the atomization cavity 221. The atomization cavity 221 may further be provided with a liquid storage structure such as a liquid storage cotton. The heating body 23 may heat the atomization substrate in the liquid storage structure such as the liquid storage cotton to generate aerosol.

A middle of the liquid storage bin 21 is further provided with a communication channel in communication with the atomization cavity 221.

In other embodiments, part or all of the liquid storage bin 21 may be integrally formed with the atomization housing 1, that is, the atomization housing 1 may be a partial structure enclosing the liquid storage cavity 211.

In this embodiment, an end of the liquid storage bin 21 adjacent to the mounting opening12 is provided with a liquid guide channel 212, and the liquid guide channel 212 may be a liquid guide hole or a liquid guide opening. For example, the liquid guide channel 212 includes two arc-shaped holes symmetrically provided along a center of the liquid storage bin 21. The liquid guide channel 212 can be opened and closed. When the liquid guide channel 212 is closed, the heating body 23 independently heats the first atomization substrate A, that is, the user can inhale a single taste. When the liquid guide channel 212 is opened, the liquid storage cavity 211 can be in communication with a liquid guide passage of the liquid storage device through the liquid guide channel 212, such that the atomization substrates with different tastes can be mixed and form a new atomization substrate with a mixed taste, and the user can inhale the atomization substrate with the mixed taste.

In this embodiment, a rotation sealing assembly 7 is rotatably provided at an end of the atomization core 2 adjacent to the mounting opening 12. The rotation sealing assembly 7 is mounted at the end of the liquid storage bin 21 adjacent to the mounting opening 12, and the rotation sealing assembly 7 can open and close the liquid guide channel 212 by rotation.

The end of the liquid storage bin 21 adjacent to the mounting opening 12 is provided with an annular mounting groove 213. The liquid guide channel 212 is provided at a bottom of the mounting groove 213, that is, the mounting groove 213 may be in communication with the liquid storage cavity 211 through the liquid guide channel 212. The rotation sealing assembly 7 is of an annular structure, and the rotation sealing assembly 7 is rotatably mounted in the annular mounting groove 213. The rotation sealing assembly 7 seals the mounting groove 213, and the rotation sealing assembly 7 can rotate in the mounting groove 213 to switch the liquid guide channel 212 between opening and closing.

The rotation sealing assembly is provided with a connecting hole 73, and the rotation sealing assembly 7 can be rotated until the connecting hole 73 is aligned and is in communication with the liquid guide channel 212, so as to open the liquid guide channel 212. The rotation sealing assembly 7 can also be rotated until the connecting hole 73 is staggered from and not in communication with the liquid guide channel 212 to close the liquid guide channel 212.

The rotation sealing assembly 7 may include a rotation engagement member 71 and a rotation sealing member 72 that are mounted in a stacked manner. The rotation sealing member 72 is mounted at the bottom of the mounting groove 213. The rotation engagement member 71 is mounted at an upper end of the rotation sealing member 72. The rotation engagement member 71 is rotatably and sealingly connected to the mounting groove 213 through the rotation sealing member 72. The rotation sealing member 72 may be an elastic member, for example, the rotation sealing member 72 may be made of silicone, and the rotation sealing member 72 can improve the sealing effect when the liquid guide channel 212 is closed.

The rotation sealing member 72 may be connected to the rotation engagement member 71 by wrapping, which may also improve the sealing effect when the liquid guide channel 212 is closed.

The rotation engagement member 71 and the rotation sealing member 72 are provided with through holes 731 that are axially aligned with and in communication with each other to form the connecting hole 73.

A Middle portion of the rotation engagement member 71 and the rotation sealing member 72 is further provided with a vent hole 74 extending through the rotation engagement member 71 and the rotation sealing member 72. The vent hole 74 is in communication with the atomization cavity 221. The suction nozzle 3 can be inserted into the vent hole 74, such that not only the suction nozzle 3 is limited, but also an air outlet channel can be sealed.

In other embodiments, the rotation sealing member 72 is a structure such as an annular sealing ring mounted at the through hole of the rotation engagement member 71, which can also seal the liquid guide channel 212 when it is closed.

In this embodiment, an end of the rotation engagement member 71 away from the rotation sealing member 72 is provided with an inserting portion 711. The inserting portion 711 is configured to be detachably engaged with a clamping portion 413 of the liquid storage device 4. When the rotation engagement member 71 is connected to the liquid storage device 4, the liquid storage device 4 can drive the rotation sealing assembly 7 to rotate, so as to switch the liquid guide channel 212 between opening and closing.

In other embodiments, the rotation sealing assembly 7 may be another movable assembly, for example, a movable sealing assembly, which is radially movable and mounted in the atomization housing 1, and can also switch the liquid guide channel 212 between the opening and closing through a radial movement.

In this embodiment, the end of the atomization housing 1 having the mounting opening 12 is further provided with a suction nozzle bracket 8. The suction nozzle bracket 8 can be fixedly connected to the atomization housing 1 through engagement, screw connection, etc. The suction nozzle bracket 8 may also be fixedly connected to the liquid storage bin 21. The suction nozzle bracket 8 is of an annular structure, and a part of the suction nozzle bracket 8 covers the rotation sealing assembly 7. Specifically, the part of the suction nozzle bracket 8 covers an end surface of the rotation engagement member 71 away from the rotation sealing member 72. The suction nozzle bracket 8 is configured to limit the rotation sealing assembly 7 in the mounting groove 213. The suction nozzle bracket 8 can facilitate the mounting and fixing of the rotation sealing member 72.

The suction nozzle bracket 8 is provided with a first engagement portion 81. The first engagement portion 81 may be an engagement structure such as a buckle protruding along a radial direction of the suction nozzle bracket 8.

The suction nozzle bracket 8 is further provided with a seal-breaking portion 82. The seal-breaking portion 82 may be a sharp structure such as a knife-shaped structure or a spike structure. The seal-breaking portion 82 and the first engagement portion 81 are staggered in a circumferential direction and the radial direction of the suction nozzle bracket 8, so that the seal-breaking portion 82 will not interfere with the engagement between the first engagement portion 81 and the suction nozzle 3.

In other embodiments, the suction nozzle bracket 8 and the atomization housing 1 may be integrally formed, and the rotation sealing assembly 7 may be limited in the mounting groove 213 by an irreversible one-way engagement manner.

In this embodiment, the suction nozzle 3 may be directly mounted at the mounting opening 12 of the atomization housing 1. One end of the suction nozzle 3 is provided with a suction portion 31, and the other end of the suction nozzle 3 is provided with a second engagement portion 32. The first engagement portion 81 and the second engagement portion 32 may be an annular engagement groove and a buckle structure. One of the first engagement portion 81 and the second engagement portion 32 is an engagement groove, the other of the first engagement portion 81 and the second engagement portion 32 is a buckle, and the first engagement portion 81 and the second engagement portion 32 can be engaged with and separated from each other by axial insertion and unplugging.

In other embodiments, the third engaging portion 81 and the fourth engaging portion 32 may be a combination of an external thread and an internal thread, and can be engaged with and separated from each other by rotation.

In other embodiments, the first engagement portion 81 and the second engagement portion 32 may be an engagement groove and a protrusion that extend in the circumferential direction of the suction nozzle bracket 8, and can be engaged with and separated from each other by rotation.

In this embodiment, an end of the suction nozzle 3 away from the suction portion 31 is provided with a connecting tube 33, the connecting tube 33 can be inserted into the connecting hole 73 of the rotation sealing assembly 7, and the connecting tube 33 can also be inserted into an air guide channel 43 of the liquid storage device 4. The connecting tube 33 may serve as a connection means.

The suction nozzle 3 may further be provided with a flange 34 protruding radially. An outer diameter of the flange 34 is greater than an outer diameter of the atomization housing 1, and the flange 34 may abut against an end surface of the mounting opening 12 of the atomization housing 1 to achieve axial limiting of the suction nozzle 3.

In other embodiments, the suction nozzle bracket 8 may be provided with an axial limiting structure protruding radially, and the axial limiting of the suction nozzle 3 can also be achieved.

In other embodiments, the suction nozzle 3 may have two variation types. One type of suction nozzle 3 is configured to be directly and fixedly connected to the atomization housing 1, that is, the suction nozzle 3 is used for the user to inhale a single taste of atomization substrate. The other type of suction nozzle 3 is configured to be connected to the liquid storage device 4, that is, the other type of suction nozzle 3 is used for the user to inhale the atomization substrate with mixed tastes. In this way, the two types of suction nozzles 3 may be differentiated, for example, in appearance to remind the user of the taste to be inhaled, and a difference in an engagement structure, so that the two types of suction nozzles 3 can be provided with different engagement portions, so as to achieve more firm engagement and installation.

In this embodiment, the liquid storage device 4 mainly includes a liquid storage structure 41 and a sealing member 42. The liquid storage structure 41 is of a cylindrical structure with an opening at an end thereof. The sealing member 42 is fixedly connected to the end of the liquid storage structure 41 having the opening. The sealing member 42 may be a sealing structure made of such as silicone. The sealing member 42 can seal the opening of the liquid storage structure 41. The liquid storage structure 41 and the sealing member 42 enclose a liquid storing cavity 411. The liquid storing cavity 411 is configured to store a second atomization substrate B of the second taste.

The liquid storage device 4 has an air guide channel 43 extending axially through the liquid storage structure 41 and the sealing member 42. The suction nozzle 3 may be mounted in the air guide channel 43, so that the suction nozzle 3 can be in communication with the atomization cavity 221 through the air guide channel 43, and the suction nozzle 3 can still be used for inhalation after the liquid storage device 4 is mounted in the atomization device.

In other embodiments, the liquid storage device 4 may also be of an integrated structure, that is, the liquid storage structure 41 is of a structure with two closed ends, and the liquid storage structure 41 can independently enclose the liquid storing cavity 411.

In this embodiment, an end of the liquid storage structure 41 away from the sealing member 42 is provided with a liquid guide passage 412. The liquid guide passage 412 may be a liquid guide hole or a liquid guide opening corresponding to the liquid guide channel 212 in shape and position. For example, the liquid guide passage 412 also includes two arc-shaped holes symmetrically provided along a center of the liquid storage structure 41.

The end of the liquid storage structure 41 away from the sealing member 42 is further provided with a sealing portion 44. The sealing portion 44 covers the end of the liquid guide passage 412. The liquid guide passage 412 can seal the liquid guide passage 412, so that a leakage of the second atomization substrate B in the liquid storing cavity 411 can be avoided.

The sealing portion 44 may be of a structure that can be scratched or punctured, for example, the sealing portion 44 may be an aluminum foil film, and the sealing portion 44 may alternatively be a film or film structure made of other materials. The sealing portion 44 may be fixed to the end of the liquid storage structure 41 away from the sealing member 42 by adhesion, etc. When the sealing portion 44 is not scratched or punctured, the liquid guide passage 412 can be closed. When the sealing portion 44 is scratched or punctured, the liquid guide passage 412 can be opened.

The end of the liquid storage structure 41 away from the sealing member 42 is provided with the clamping portion 413. The clamping portion 413 is of a structure adapted to the inserting portion 711 of the rotation sealing assembly 7. For example, one of the inserting portion 711 and the clamping portion 413 is a buckle, and the other is a groove, and the buckle and the groove can be engaged with and separated from each other through axial insertion and unplugging. The buckle may be configured as a structure with a certain elasticity, so that the insertion and removal can be achieved by a certain force.

The connection between the inserting portion 711 and the clamping portion 413 can also limit an axial rotation, so that the liquid storage device 4 can drive the rotation sealing assembly 7 to rotate. Certainly, other rotation limiting structures may be provided between the liquid storage device 4 and the rotation sealing assembly 7, such as a slot and an insert block, so that the liquid storage device 4 and the rotation sealing assembly 7 can be movably connected to and separated from each other in the axial direction, and the relative rotation limiting of the liquid storage device 4 and the rotation sealing assembly 7 can also be achieved.

An end of the sealing member 42 away from the liquid storage structure 41 is provided with a snap-fit portion 421. The snap-fit portion 421 may be an annular engagement groove, and a side wall of the annular engagement groove is provided with a radial protrusion structure that is the same as the first engagement portion 81, so that the sealing member 42 can be engaged with the second engagement portion 32 of the suction nozzle 3 through the snap-fit portion 421.

The atomization device in this embodiment mainly includes the following two use modes:

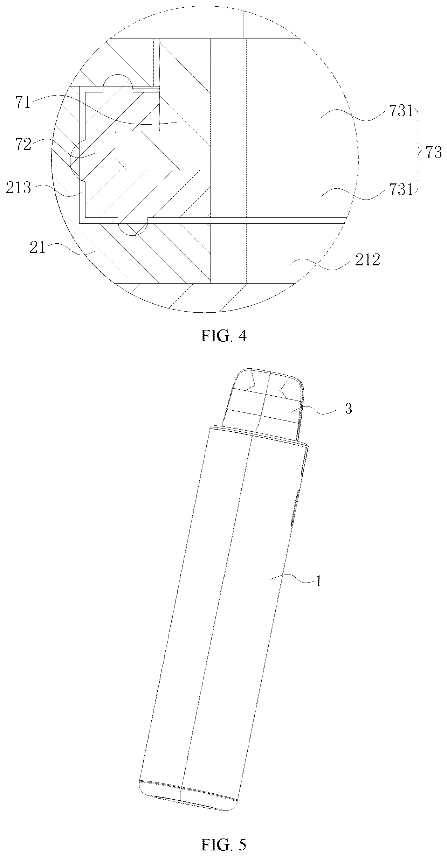

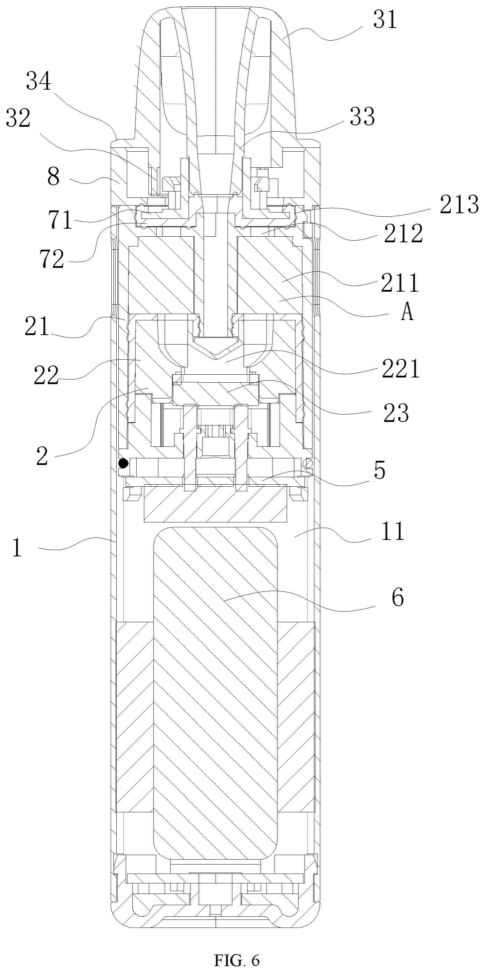

Referring to FIGS. 5 and 6, a first use mode is a single taste mode in which the first atomization substrate A is inhaled by the user.

In this mode, no liquid storage device 4 is mounted, the suction nozzle 3 is directly mounted on the atomization housing 1, and the second engagement portion 32 of the suction nozzle 3 can be fixedly connected to the first engagement portion 81 of the suction nozzle bracket 8 by insertion.

In this mode, the rotation sealing assembly 7 closes the liquid guide channel 212, and the first atomization substrate A can enter the atomization cavity 221 to be heated and atomized.

Referring to FIGS. 1 to 3, the second use mode is a mixed taste mode of the first atomization substrate A and the second atomization substrate B.

In this mode, the liquid storage device 4 is mounted, the suction nozzle 3 is rotated to be removed from the atomization housing 1, and then the second engagement portion 32 of the suction nozzle 3 is engaged with the snap-fit portion 421 of the liquid storage device 4, so that the suction nozzle 3 and the liquid storage device 4 are connected. Then, the liquid storage device 4 is inserted into the mounting opening 12 of the atomization housing 1, and the clamping portion 413 of the liquid storage device 4 is engaged with the inserting portion 711 of the rotation sealing assembly 7. When the user rotates the suction nozzle 3 or the liquid storage device 4, the liquid storage device 4 will drive the rotation sealing assembly 7 to rotate synchronously, so that the rotation sealing assembly 7 opens the liquid guide channel 212. At the same time of rotation, the seal-breaking portion 82 of the suction nozzle bracket 8 will scratch the seal portion 44 to open the liquid guide passage 412. In this state, the liquid storage device 4 is mounted between the suction nozzle 3 and the atomization housing 1, and the liquid storage cavity 211 is in communication with the liquid storing cavity 411 through the liquid guide channel 212 and the liquid guide passage 412, the second atomization substrate B will be mixed with the first atomization substrate A to form a mixed atomization substrate. When the user inhales, the mixed atomization substrate will enter the atomization cavity 221 to be heated and atomized to form aerosol.

According to the atomization device of the embodiments, since the suction nozzle 3 is detachably connected to the atomization housing 1, the liquid storage device 4 can be mounted between the mounting opening 12 of the atomization housing 1 and the suction nozzle 3, and the liquid storing cavity 411 of the mounted liquid storage device 4 can be in communication with the liquid storage cavity 211 of the atomization core 2. Therefore, the user can inhale the atomization substrate of one taste in the liquid storage cavity 211 in the atomization core 2, and can also inhale the atomization substrate of any new taste formed by combining the liquid storage device 4 with any other taste of atomization substrate with the atomization core 2 according to the requirements, so as to satisfy the personalized and various inhalation requirements of the user.

Referring to FIG. 5 and FIG. 6, in an embodiment, an atomization device is provided, and the difference between the atomization device of this embodiment and the atomization device in any of the above embodiments lies in that the liquid storage device 4 is omitted.

The atomization device of this embodiment includes an atomization housing 1, an atomization core 2, a suction nozzle 3, a control board 5, and a battery 6. In this embodiment, the atomization housing 1 and the suction nozzle 3 can be detachably connected, and a liquid storage device 4 can be mounted between the atomization housing 1 and the suction nozzle 3, so that the inhalation of a single taste and the inhalation of any combination of tastes can also be achieved.

In this embodiment, the atomization device can be used alone, can be used in combination with the above-mentioned liquid storage device 4, and can be used in combination with other accessories similar to the above-mentioned liquid storage device 4, for example, can be used in series or in parallel with a plurality of liquid storage devices 4.

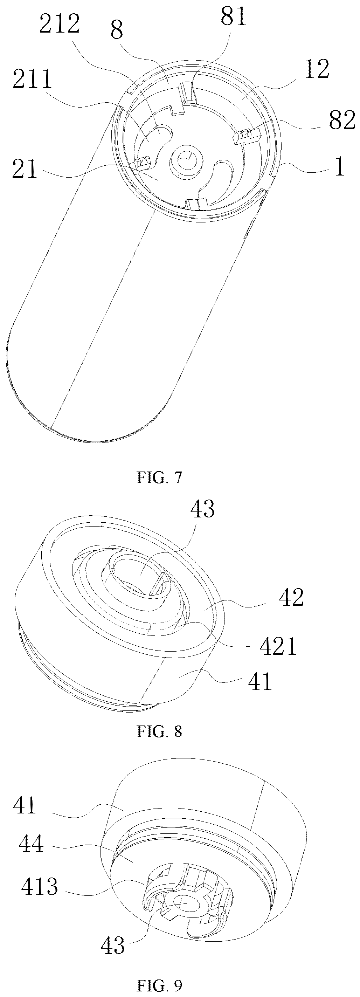

Referring to FIG. 8 and FIG. 9, in an embodiment, a liquid storage device is provided, and the liquid storage device is the liquid storage device 4 in any of the above embodiments.

The liquid storage device 4 in this embodiment can be used as an independent accessory, the liquid storage device 4 can be adapted to the atomization device in any of the above embodiments for use, and the liquid storage device 4 can also be used in combination with other atomization devices having related connection structures.

The above specific examples are used to explain the present application, which is only to facilitate the understanding of the present application and is not intend to limit the present application. For those skilled in the art to which the present application belongs, several simple deductions, variations or substitutions may be made according to the idea of the present application.

## Claims

1. An atomization device, comprising:
an atomization housing (1) provided with a receiving cavity (11) and a mounting opening (12) in communication with the receiving cavity (11);
an atomization core (2) received in the receiving cavity (11), wherein the atomization core (2) is provided with a liquid storage cavity (211) and an atomization cavity (221), the liquid storage cavity (211) is configured to store an atomization substrate and is in communication with the atomization cavity (221), and an end of the liquid storage cavity (211) adjacent to the mounting opening (12) is provided with a liquid guide channel (212) that is openable and closeable; and
a suction nozzle (3) detachably mounted at the mounting opening (12) and being in communication with the atomization cavity (221), wherein a liquid storage device (4) is detachably mounted between the suction nozzle (3) and the mounting opening (12), the liquid storage device (4) is configured to open the liquid guide channel (212), so that a liquid storing cavity (411) of the liquid storage device (4) is in communication with the liquid storage cavity (211), and the suction nozzle (3) is in communication with the atomization cavity (221) through an air guide channel (43) of the liquid storage device (4).

2. The atomization device according to claim 1, further comprising a rotation sealing assembly (7) rotatably provided at an end of the atomization core (2) adjacent to the mounting opening (12), wherein the rotation sealing assembly (7) is provided with a connecting hole (73), and the rotation sealing assembly (7) is configured to be detachably connected to the liquid storage device (4);
the rotation sealing assembly (7) is capable of being driven by the liquid storage device (4) to rotate until the connecting hole (73) is in communication with the liquid guide channel (212), so as to open the liquid guide channel (212);
the rotation sealing assembly (7) is capable of being driven by the liquid storage device (4) to rotate until the connecting hole (73) is staggered from and not in communication with the liquid guide channel (212), so as to close the liquid guide channel (212).

3. The atomization device according to claim 2, wherein the rotation sealing assembly (7) comprises a rotation engagement member (71) and a rotation sealing member (72), the rotation engagement member (71) is rotatably connected to the atomization core (2) through the rotation sealing member (72), an end of the rotation engagement member (71) away from the rotation sealing member (72) is provided with an inserting portion (711), the inserting portion (711) is configured to be detachably engaged with a clamping portion (413) of the liquid storage device (4), the rotation sealing member (72) is elastic, the rotation engagement member (71) and the rotation sealing member (72) are provided with through holes (731) that are aligned with and in communication with each other to form the connecting hole (73).

4. The atomization device according to claim 2, wherein an end of the atomization core (2) adjacent to the mounting opening (12) is provided with a mounting groove (213), the liquid guide channel (212) is located at a bottom of the mounting groove (213), and the rotation sealing assembly (7) is rotatably mounted in the mounting groove (213).

5. The atomization device according to claim 2, wherein a suction nozzle bracket (8) is provided at an end of the atomization core (2) adjacent to the mounting opening (12), a part of the suction nozzle bracket (8) covers the rotation sealing assembly (7), and the suction nozzle bracket (8) is configured to limit the rotation sealing assembly (7) in the atomization housing (1).

6. The atomization device according to claim 5, wherein the suction nozzle bracket (8) is provided with a first engagement portion (81), an end of the suction nozzle (3) adjacent to the atomization core (2) is provided with a second engagement portion (32), the second engagement portion (32) is configured to be detachably connected to the first engagement portion (81), and the second engagement portion (32) is further configured to be detachably connected to a snap-fit portion (421) of the liquid storage device (4).

7. The atomization device according to claim 5, wherein the suction nozzle bracket (8) is further provided with a seal-breaking portion (82), the seal-breaking portion (82) is configured to scratch or puncture a sealing portion (44) of the liquid storage device (4) configured to seal the liquid storing cavity (411), so as to communicate liquid storage cavity (211) with the liquid storing cavity (411).

8. The atomization device according to claim 5, wherein the seal-breaking portion (82) is a knife-shaped structure or a spike structure.

9. The atomization device according to claim 1, wherein the atomization core (2) comprises a liquid storage bin (21), a sealing structure (22), and a heating body (23), the sealing structure (22) is mounted at an end of the liquid storage bin (21), the liquid storage bin (21) and the sealing structure (22) enclose the liquid storage cavity (211), the atomization cavity (221) is located in the sealing structure (22), and the heating body (23) is mounted in the atomization cavity (221).

10. The atomization device according to claim 9, wherein a control board (5) and a battery (6) are provided in the atomization housing (1), the control board (5) is electrically connected to the battery (6) and the heating body (23).

11. The atomization device according to any one of claims 1 to 10, wherein the liquid storage device (4) comprises a liquid storage structure (41) and a sealing member (42), the sealing member (42) is mounted at an end of the liquid storage structure (41), the sealing member (42) and the liquid storage structure (41) enclose a liquid storing cavity (411), the liquid storage structure (41) and the sealing member (42) are provided with the air guide channel (43) extending through the liquid storage structure (41) and the sealing member (42), an end of the liquid storage structure (41) away from the sealing member (42) is configured to be detachably connected to the atomization core (2), an end of the sealing member (42) away from the liquid storage structure (41) is configured to be detachably connected to the suction nozzle (3), the end of the liquid storage structure (41) away from the sealing member (42) is provided with a liquid guide passage (412) in communication with the liquid storing cavity (411), the end of the liquid storage structure (41) away from the sealing member (42) is further provided with a sealing portion (44), the sealing portion (44) is configured to seal the liquid guide passage (412), and the sealing portion (44) is capable of being scratched or punctured.

12. The atomization device according to claim 11, wherein the end of the liquid storage structure (41) away from the sealing member (42) is provided with a clamping portion (413), the clamping portion (413) is configured to be detachably connected to the atomization core (2), an end of the sealing member (42) away from the liquid storage structure (41) is provided with a snap-fit portion (421), and the snap-fit portion (421) is configured to be detachably connected to the suction nozzle (3).

13. The atomization device according to claim 11, wherein the sealing portion (44) is an aluminum foil film.

14. A liquid storage device comprising a liquid storage structure (41) and a sealing member (42), wherein the sealing member (42) is mounted at an end of the liquid storage structure (41), the sealing member (42) and the liquid storage structure (41) enclose a liquid storing cavity (411), the liquid storage structure (41) and the sealing member (42) are cooperatively provided with the air guide channel (43), an end of the liquid storage structure (41) away from the sealing member (42) is configured to be detachably connected to an atomization core (2), an end of the sealing member (42) away from the liquid storage structure (41) is configured to be detachably connected to a suction nozzle (3), the end of the liquid storage structure (41) away from the sealing member (42) is provided with a liquid guide passage (412) in communication with the liquid storing cavity (411), the end of the liquid storage structure (41) away from the sealing member (42) is further provided with a sealing portion (44), the sealing portion (44) is configured to seal the liquid guide passage (412), and the sealing portion (44) is capable of being scratched or punctured.

15. The liquid storage device according to claim 14, wherein the end of the liquid storage structure (41) away from the sealing member (42) is provided with a clamping portion (413), the clamping portion (413) is configured to be detachably connected to the atomization core (2), an end of the sealing member (42) away from the liquid storage structure (41) is provided with a snap-fit portion (421), and the snap-fit portion (421) is configured to be detachably connected to the suction nozzle (3).

16. The liquid storage device according to claim 14 or 15, wherein the sealing portion (44) is an aluminum foil film.
